# EUROPÄISCHE PATENTANMELDUNG

(11) **EP 1 154 240 A2**
(43) Veröffentlichungstag der Anmeldung: **14.11.2001**
(21) Anmeldenummer: 01111530.0
(22) Anmeldetag: 11.05.2001
(51) Int. Cl.: G01D 5/14

(54) **Drehwinkelsensor**

(30) Priorität: 13.05.2000 DE 20008663 U; 10.01.2001 DE 1016459
(71) Anmelder: AB Elektronik GmbH, 59368 Werne (DE)
(72) Erfinder: Apel, Peter, 59394 Südkirchen (DE)
(74) Vertreter: Hoffmeister, Helmut, Dr.

(57) **Zusammenfassung**

Damit bei einer Drehstellungsgebervorrichtung die Montage vereinfacht und Temperaturschwankungen ohne Zerstörung und Beinträchtigung der Funktion beherrschbar werden, ist ein Stanzgitterelement (25) wenigstens teilweise in ein Halteprofil (24) eingebettet, mit denen als Halteeinheit (23) ausgebildet eine Statoreinheit (2) mit einem Sensorelement (4, 5) und eine Ausgangseinheit 26; 51) gehalten sind. Wenigstens in den Gitterschienen des Stanzgitterelements (25) und wenigstens teilweise in dem Halteprofil (24) ist eine Dehnungseinheit (30) angeordnet.

Die Dehnungseinheit (30) besteht aus in einem Gitterfensterdes Halteprofils (24) freigelegten Gitterschienen. Das Gitterfenster ist durch wenigstens ein Haltestegprofil begrenzt. Wenigstens in die Gitterschienen ist wenigstens eine Dehnungsausnehmung eingebracht.

## Beschreibung

Die Erfindung betrifft eine Drehstellungsgebervorrichtung, die wenigstens aufweist
- eine Rotoreinheit, die in eine Rotationsachse an einem Wellenelement angeordnet ist,
- eine Statoreinheit, mit wenigstens einem Sensorelement, durch das ein Signal zu erzeugen ist, das einer Drehstellung der Rotoreinheit gegenüber der Statoreinheit entspricht,
- ein Stanzgitterelement, das aus wenigstens einer Gitterschiene besteht, mit dem das Signal an eine Ausgangseinheit weiter zu leiten ist und das wenigstens teilweise in einen Isolierstoff eingebettet ist, und
- wenigstens ein Bauelement.

Eine Vorrichtung der eingangs genannten Art ist aus der EP-A-1 054 237 (entspricht DE-U-20 002 719, DE-U-20 003512 bzw. US-Anmeldung-Nr. 09/788.630 und US-Anmeldungs-Nr. 09/702.342) bekannt.
In eine Abstandsausnehmung zwischen Statorelementen einer Statoreinheit sind zwei Hall-Einheiten angeordnet. Unter Belassung eines Luftspalts bewegt sich eine Rotoreinheit mit einem Magnetelement gegenüber der Statoreinheit. Die Stator-und die Rotoreinheit sind wenigstens teilweise von einem Gehäusekörper umgeben. Der Gehäusekörper weist eine Stekkereinheit mit Steckkontakten auf. Die Hall-Einheiten sind mit den Steckkontakten der Steckereinheit durch ein Stanzgitter verbunden. Auf dem Stanzgitter, das aus mehreren Gitterschienen besteht, sind Bauelemente angeordnet. Beim Formen des Gehäusekörpers werden das Stanzgitter und die Bauelemente wenigstens teilweise in eines der Gehäuseteile eingeformt, die aus Kunststoff bestehen.

Als verbesserungswürdig hat sich die Montage der einzelnen Teile der Dreh-Stellungsgebervorrichtung herausgestellt. Außerdem haben das Stanzgitter und die Teile des Gehäuses, in dem das Stanzgitter eingeformt ist, unterschiedliche Ausdehnungskoeffizienten. Wird eine derartige Vorrichtung im Motorraum eines Fahrzeugs eingesetzt, kann es aufgrund der dort herrschenden Temperaturen zwischen minus 40°C und plus 140°C zu Verschiebungen der Hall-Einheiten und daraus resultierend zu Meßungenauigkeiten sowie zu Materialausdehnugs-Problemen bis hin zur Zerstörung des Stanzgitters und des Gehäusekörpers kommen.

Ein Drehwinkelsensor ist aus der WO-A-9 514 911 bekannt. Er besteht aus einer stationären und einer rotierenden Formation. Die stationäre Formation enthält zwei halbmondförmige Statorelemente, zwischen denen sich eine Abstandsausnehmung befindet, in der ein Hall-Element angeordnet ist. Die rotierende Formation weist ein ringförmig ausgebildetes Magnetelement auf, das von einer Halteeinheit gehalten wird und unter Belassung eines Luftspalts um die Statorelemente bewegbar ist.

Dieser Drehwinkelsensor hat sich bewährt, allerdings ist seine Montage zu aufwendig.

Es stellt sich deshalb die Aufgabe, eine Drehstellungsgebervorrichtung der eingangs genannten Art so weiter zu entwikkeln, daß die Montage vereinfacht wird und die Temperaturschwankungen ohne Zerstörung und Beinträchtigung der Funktion beherrschbar werden.

Erfindungsgemäß wird diese Aufgabe durch die Merkmale des Anspruchs 1 oder 2 gelöst.

Die mit der Erfindung erzielten Vorteile bestehen insbesondere darin, daß durch die Dehnungseinheit, die in der Halteeinheit zwischen den Statorteilelementen und der Ausgangseingang angeordnet ist, die Ausdehnungsschwankungen der aus Metall bestehenden Gitterschienen und des aus Kunststoff bestehenden Halteprofils ausgeglichen wird. Ein weiterer Vorteil besteht darin, daß das Sensorelement bereits mit der Ausgangseinheit verbunden ist und die Statoreinheit mit dem Sensorelement und der Ausgangseinheit durch die Halteeinheit als Fertigteil gehalten wird. Hierdurch reduzieren sich die Montagekosten beim Zusammensetzen der Stellungsgebervorrichtung. Darüber hinaus sind wesentliche Teile der Stellungsgebervorrichtung bereits in sich vorjustiert und brauchen nach der Montage nicht mehr einjustiert zu werden.

Wenigstens ein Bauelement kann in das Halteprofil eingebettet sein. Die Statoreinheit mit dem Sensorelement und die Ausgangseinheit können durch das Halteprofil wie bereits beschrieben, gehalten werden.

Das Halteprofil kann, wie bereits erwähnt, aus Isolierstoff hergestellt sein. Es ist aber auch möglich, das Halteprofil aus Metall herzustellen, wobei im Inneren des aus Metall bestehenden Halteprofils das Stanzgitter durch den Isolierstoff isoliert gehalten wird.

Jedes Sensorelement kann wenigstens ein Anschlußleitungselement aufweisen, die dann mit den Gitterschienen des Stanzgitterelements verbunden sind. Auf wenigstens einem Anschlußleitungselement kann wenigstens ein weiteres Bauelement angeordnet sein. Durch die Anordnung von Bauelementen direkt auf den Anschlußleitungselementen der Sensorelemente reduzieren sich die Fertigstellungskosten. Das Prüfen der Bauelemente kann mit den Sensorelementen vor derem weiteren Verbauen bereits geprüft werden. Sind Bauelemente oder das Sensorelement selbst defekt, braucht nur ein Teil der Stellungsgebervorrichtung ersetzt werden.

In die Leitungsanschlußelemente kann wenigstens eine Leitungsdehnungsausnehmung eingebracht werden. Die Art und Wieise der Einbringung von Leitungsdehnungsausnehmungen hängt selbstverständlich von der Ausbildung der Anschlußleitungselemente ab. Die weiteren Bauelemente können auf zwei nebeneinanderliegenden Anschlußleitungselementen aufgeschweißt werden. Damit wird eine sehr kostengünstige Verbindungstechnik eingesetzt.

Die Bauelemente und die weiteren Bauelemente können parallel oder versetzt zueinander auf den Gitterschienen und auf den Anschlußleitungselementen angeordnet sein. Die Bauelemente und die weiteren Bauelemente können dabei einzeln oder auf Leiterplatten vorhanden sein. Welche Form der Positionierung der Bauelemente und/oder Leiterplatten mit einem oder mehreren Bauelementen zum Einsatz kommt, hängt von den jeweiligen Forderungen bzw. Möglichkeiten ab.

Die Dehnungseinheit kann auf unterschiedliche Art und Weise ausgebildet werden.

Eine erste Dehnungseinheit weist einen im Stanzgitter angeordneten Stanzgitterelementdehnungsbogen und einen im Halteprofil zu diesem kompatibel angeordneten Halteprofildehnungsbogen auf. Verwendet wird hier der aus dem Rohrleitungsbau bekannte Dehnungsbogen, der komplett in die Halteeinheit eingeformt wird. Dieser Dehnungsbogen kann halbkreisförmig, U-förmig, Ω-förmig, V-förmig oder dgl. ausgebildet sein. Eine derartige Dehnungseinheit nimmt widerspruchslos alle Längenänderungen des Stanzgitters und des sie umhüllenden Halteprofils der Halteeinheit auf. Sie besticht durch Einfachheit und einen hohen Widerstand gegen äußere Einflüsse wie Schmutz, Nässe und dergleichen.

Eine zweite Dehnungseinheit ist da etwas komfortabler ausgebildet. Hierbei wird in das Halteprofil ein Gitterfenster eingebracht, das die Gitterschienen in diesem Bereich freilegt. Das Gitterfenster kann durch wenigstens ein Haltestegprofil begrenzt werden. Die Dehnungsausnehmungen in den Gitterschienen nehmen Materialschrumpfungen bzw. Materialdehnungen auf. Die Gitterschienen können sich bei Materialausdehnungen im Bereich der Dehnungsausnehmungen seitwärts oder nach oben verformen. Bei Schrumpfungsprozessen hingegen wird das Material der Gitterschienen im Bereich der Gitterausnehmungen gestreckt. Kunststoff ist hinsichtlich Reckungen bzw. Stauchungen etwas flexibler als Metall. Deshalb kann das gerade verlaufende Haltestegprofil des Gitterfensters geringe Stauchungen bzw. Auseinanderziehungen aufnehmen.

Damit die Materialveränderungen nicht allein nur durch die Materialeigenschaften ausgenommen werden müssen, kann das Halteprofil oder die freigelegten Gitterschienen etwas dehnungsintensiver ausgebildet werden. Und zwar kann hier ein Dehnungsbogenprofil eingesetzt werden. Das Dehnungsbogenprofil kompensiert alle Materialveränderungen, die sich in dem sehr weiten Temperaturbereich zwischen minus 40°C und plus 140°C im Motorraum ergeben können, problemlos.

Bei einer dritten Dehnungseinheit sind zwei Dehnungseinheiten der zweiten Ausführungsform hintereinander angeordnet.

Die Dehnungsbögen können bei der zweiten und der dritten Dehnungseinheit nach unten und/oder nach oben gegenüber den gerade durch sie verlaufenden Gitterschienen des Stanzgitters gebogen werden.

Zwischen dem ersten und dem zweiten Gitterfenster der dritten Dehnungseinheit kann ein Dehnungsstufenprofil angeordnet sein. Hierdurch wird die dritte Dehnungseinheit quasi zu einer vierten Dehnungseinheit weiterentwickelt.

Die Statoreinheit kann aus zwei Statorsegmenten bestehen, die unter Belassung wenigstens einer Abstandsausnehmung zueinander angeordnet sind. In einer der Abstandsausnehmungen kann wenigstens eine Hall-Einheit als Sensorelement angeordnet sein. Die Rotoreinheit kann aus wenigstens einem Magnetsegment bestehen, das an dem Wellenelement angeordnet ist. Rechtwinklig zur Rotorachse kann dann die Halteeinheit in einen Gehäusekörper so eingesetzt werden, daß die Statorsegmente gegenüber dem Magnetelement unter Belassung eines Luftspaltes und die Ausgangseinheit lagegerecht im Gehäuse angeordnet wird. Hierdurch wird die Stellungsgebervorrichtung mit wenigen Handgriffen montiert. Die Montage verringert sich deshalb auf wenige Handgriffe, weil wesentliche Teile bereits lagegerecht montiert und einjustiert sind. Die Ausgangseinheit kann aus einer Steckereinheit und aus einer Antriebseinheit bestehen. Die Steckereinheit kann dabei lagerecht in eine Steckerausnehmung des Gehäusekörpers eingesetzt werden. Die Antriebseinheit kann beim Einsetzen lagegerecht in ein Antriebsgehäuse des Gehäusekörpers montiert werden.

Die Anschlußleitungselemente können entlang einer Abwicklungslinie wenigstens teilweise abgewinkelt sein. Vorgesehen werden zwei Halleinheiten. Diese Halleinheiten werden entlang der Abwicklungslinie etwa in einem Winkel 90° abgewinkelt, damit sie lagegerecht und einjustiert in die Abstandsausnehmungen zwischen den beiden Statorteilelementen positioniert werden können. Die verschiedenen Ausführungsformen der Dehnungseinheit sichern, daß die beiden Hall-Einheiten immer in der gleichen Position in den Abstandsausnehmungen angeordnet bleiben. Hierdurch wird eine genaue Messwerterfassung der Drehveränderung der Rotoreinheit gegenüber der Statoreinheit gemessen.

Die Erfindung ist in der Zeichnung dargestellt und wird im folgenden näher beschrieben.

### Es zeigen in schematischer Darstellung:

- Fig. 1: einen Drehwinkelsensor mit einer Halteeinheit, in der eine Dehnungseinheit angeordnet ist in einem eingebauten Zustand in einer schematischen, perspektivischen Teildarstellung,
- Fig. 2: einen Drehwinkelsensor gem. Fig. 1 in einer auseinandergezogenen schematischen, perspektivischen Teildarstellung von oben gesehen,
- Fig. 3: einen Drehwinkelsensor gem. Fig. 1 in einer auseinandergezogenen schematischen perspektivischen Teildarstellung von der Seite gesehen,
- Fig. 4: einen Schnitt durch einen Drehwinkelsensor in einer schematischen Darstellung,
- Fig. 5: eine Draufsicht auf einen Drehwinkelsensor gem. Fig. 1 mit auf einem Stanzgitter angeordneten Bauelementen in einer schematischen Darstellung,
- Fig. 6: eine Dehnungseinheit gem. Fig. 1 bis 3 in einer schematisch dargestellten Draufsicht,
- Fig. 7: eine erste Ausführungsform einer Dehnungseinheit gem. Fig. 6 in einer schematisch dargestellten Schnittdarstellung,
- Fig. 8: eine zweite Ausführungsform einer Dehnungseinheit gem. Fig. 6 in einer schematisch dargestellten Schnittdarstellung,
- Fig. 9: eine dritte Ausführungsform einer Dehnungseinheit gem. Fig. 6 in einer schematisch dargestellten Schnittdarstellung,
- Fig. 10: eine Hall-Einheit mit Anschlußleitungsgelementen für einen Drehwinkelsensor gem. Fig. 1 bis 5 mit zugeordneten Bauelementen in einer schematisch dargestellten Draufsicht,
- Fig. 11: eine Hall-Einheit gem. Fig. 10 in einer schematisch dargestellten Seitenansicht,
- Fig. 12: Bauelemente-Halteprofile für ein Stanzgitter gem. Fig. 5 und Anschlußleitungen gem. Fig. 10 in einer schematisch dargestellten Teildraufsicht,
- Fig. 13: Leitungsdehnungsausnehmungen für Anschlußleitungen gem. Fig. 10 in einer schematisch dargestellten Teildraufsicht,
- Fig. 14: eine weitere Hall-Einheit mit Anschlußleitungen und zugeordneten Bauelementen in einer schematisch dargestellten Draufsicht und
- Fig. 15: eine Verschaltung von Anschlußleitungselementen mit Gitterschienen in einer schematisch dargestellten Teildarstellung.

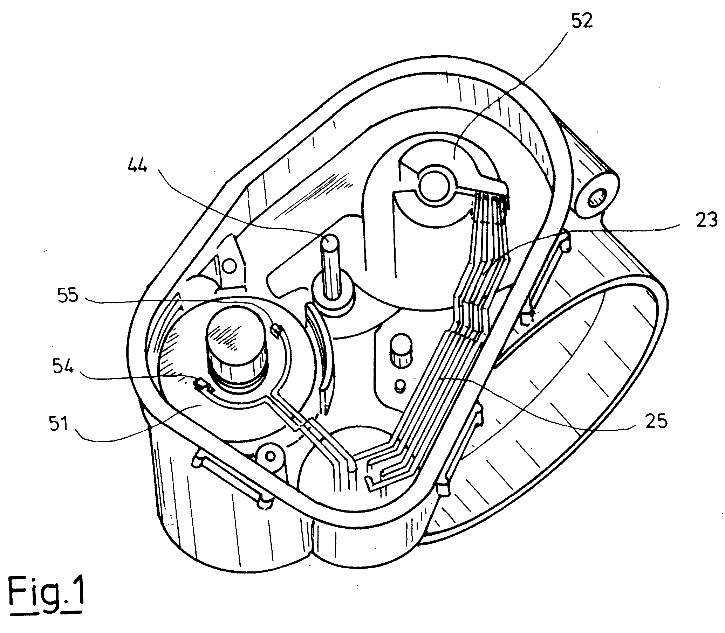

Wie die Fig. 1 bis 5 zeigen, weist ein Drehwinkelsensor
- eine Rotoreinheit 1 und
- eine Statoreinheit 2
- auf.

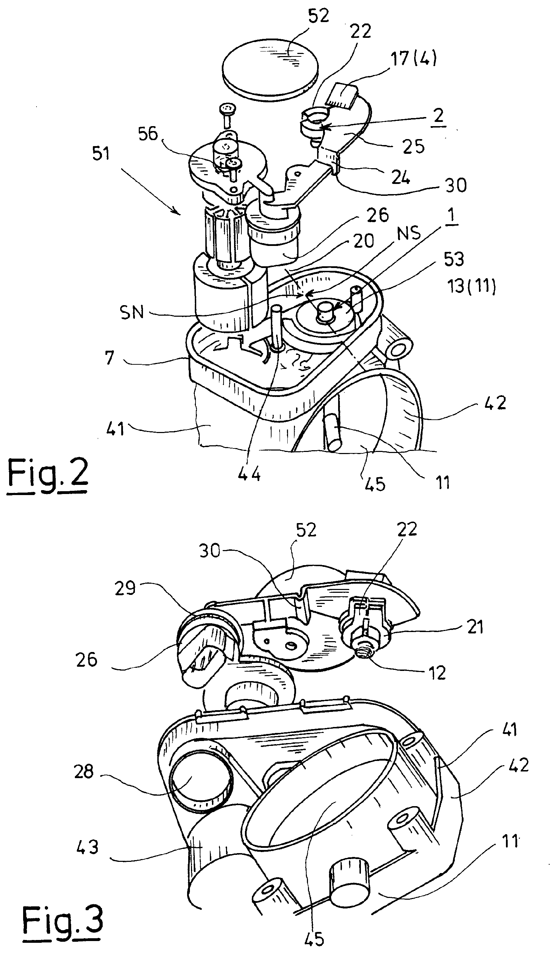

Die Statoreinheit 2 besteht in den Fig. 2 und 3 aus zwei gegenüberliegenden Statorsegmenten 21 und 22. Beide Statorsegmente sind kneifzangenförmig ausgebildet. Hervorzuheben ist, daß sie keine scharfen Kanten aufweisen.

Zwischen beiden Statorsegmenten 21, 22 befinden sich zwei Abstandsausnehmungen 9.1, 9.2, wobei in der breiteren Abstandsausnehmung 9.1 eine oder zwei Hall-Einheiten 4, 5 angeordnet sind. Die Hall-Einheiten können als Hall-Element bzw. Hall-IC-Schaltkreis ausgebildet sein.

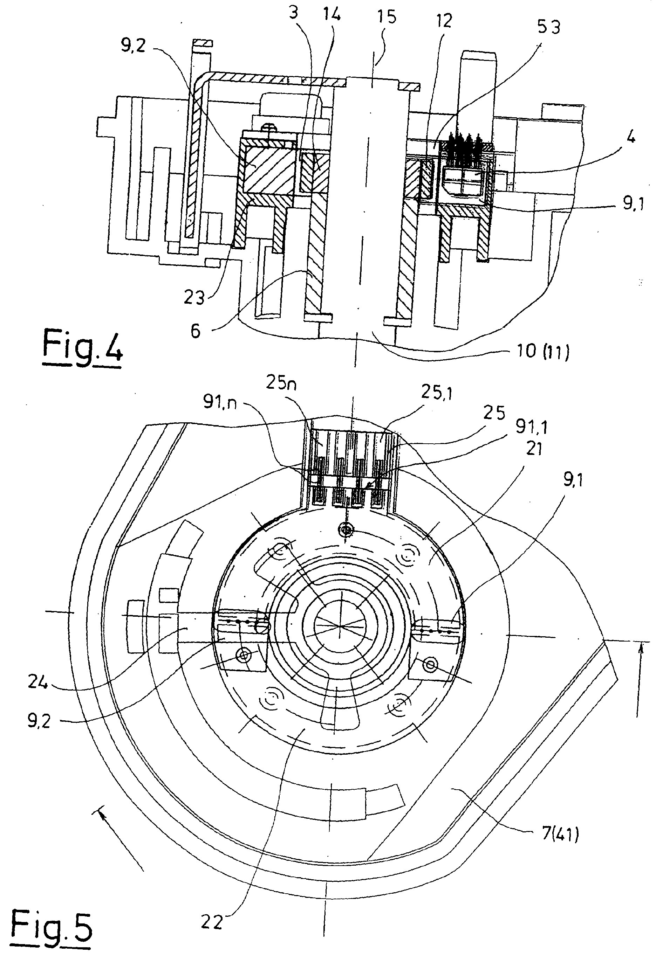

Die Statorsegmente 21, 22 mit den eingesetzten Hall-Einheiten 4, 5 werden von einer Halteeinheit 23 gehalten, die im rechten Winkel zu einer Rotationsachse 15 angeordnet ist (vgl. Fig. 4). Die Halteeinheit besitzt ein Halteprofil 24, in das ein Stanzgitterelement 25 eingebettet ist. Mit dem Stanzgitterelement verbunden ist eine Leiterplatte, die als IC-Schaltkreis 17 ausgebildet ist. Der Schaltkreis 17 weist Bauelemente und/oder die Hall-Einheiten 4, 5 auf.

Die beiden Hall-Einheiten 4, 5 können aber auch direkt mit dem Stanzgitterelement 25 verbunden werden.

Das Stanzgitterelement 25 besteht aus nebeneinanderliegenden Gitterschienen 25.1, ..., 25.n (vgl. Fig. 5). Auf den Gitterschienen sind Bauelemente 91.1, ..., 91.n angeordnet.
Am anderen Ende, den Statorsegmenten 21, 22 im wesentlichen gegenüberliegend, ist an der Statorhalteeinheit 25 eine Steckereinheit 26 und eine Antriebseinheit 51 angeordnet. Das Stanzgitterelement verbindet, wie die Fig. 2 und 3 zeigen, den IC-Schaltkreis 17 mit den beiden Hall-Einheiten 4, 5 bzw. die Hall-Einheiten 4 und 5 alleine und die Stekkereinheit 26 und die Antriebseinheit 51 (vgl. Fig. 1).

Wie insbesondere Fig. 3 zeigt, ist die Steckereinheit 26 mit einem aufgespritzten oder montierten Dichtungselement 29 versehen. Bei dem aufgespritzten Dichtungselement 29 kann es sich um einen weicheren Kunststoff handeln. Das Dichtungselement sichert, daß die Steckereinheit gegenüber den übrigen Teilen der Vorrichtung feuchtigkeits- und staubgeschützt abgedichtet ist.

Die Antriebseinheit 51 weist einen Elektromotor mit Kohlebürsten und einer Motorwelle auf. Im Bereich der Motorwelle ist eine integrierte Lagerbuchse 56 vorgesehen (vgl. Fig. 2). Die Kohlebürsten werden ebenfalls lagegerecht von der Halteeinheit 23 in Kohlebürstenhaltern 54, 55 gehalten. Die beiden Kohlebürsten sind jeweils mit einer Gitterschiene verbunden (vgl. Fig. 1).

Der Rotor 1 weist ein Ringmagnetelement 13 auf, das an einer Achse 20 auf einer Seite eine Nord-Polung N S und auf einer gegenüberliegenden Seite eine Süd-Nord-Polung S N aufweist. Hierdurch entstehen quasi zwei sich gegenüberliegende Magnetsegmente. Die besondere Polung der beiden Magnetsegmente sichert, daß der magnetische Fluß einen geraden Verlauf hat.

Wie insbesondere Fig. 4 zeigt, ragt aus einem Gehäusekörper 7 ein Wellenelement 10, das von einem Achsenhaltekörper 6 umgeben ist.

An dem Wellenelement 10 ist ein Magnethalteelement 14 angeordnet, das ein Ringmagnetelement 13 oder ein Magnetsegment hält. Das Magnethalteelement 14 besteht aus einem magnetisch leitendem Material, wobei das Wellenelement aus einem magnetisch nicht leitendem Material besteht.

Der Gehäusekörper 7 ist auf einem Drosselklappengehäuse 41 angeordnet. In dem Boden des Gehäusekörpers ist eine Stekkerausnehmung 28 angebracht. An dem Boden des Gehäusekörpers ist ein zum Gehäusekörper 7 offenes Antriebsgehäuse 43 angeordnet.

Aus dem Gehäusekörper 7 ragt ein Stift 44, auf dem sich ein Deckel abstützen kann, mit dem sich der Gehäusekörper 7 verschließen läßt.

Im wesentlichen rechtwinklig zum Gehäusekörper weist das Drosselklappengehäuse eine Drosselklappenausnehmung 42 auf, in der drehbeweglich mit einer Drosselklappenwelle 11 eine Drosselklappe 45 angeordnet ist. Die Drosselklappenwelle 11 geht, wie insbesondere Fig. 4 zeigt, in das Wellenelement 10 über.

Die Antriebseinheit 51 ist mit der Drosselklappenwelle 11 durch eine Getriebeeinheit verbunden, von der wenigstens Zahnräder 52, 53 zu sehen sind. Das Zahnrad 53 ist bereits auf das Wellenelement 10 aufgesetzt, während das Zahnrad 52 später auf einen Stift aufgesteckt wird und mit dem Zahnrad der Antriebseinheit 51 zusammenarbeitet.

Erfindungswesentlich ist
- daß mit der Halteeinheit 23 die Statoreinheit 1 mit den beabstandeten Statorsegmenten 21, 22 und bereits eingesetzter Hall-Einheiten 4, 5, die Steckereinheit 26, das Stanzgitterelement 25 und das sie umgebende Halteprofil 24, die Antriebseinheit 51 mit der Motoreinheit und den zugehörigen Kohlebürsten bzw. dessen Motorwelle und ein Teil der Getriebeeinheit montagegerecht gehalten werden und
- daß die Rotoreinheit mit dem Ringmagnetelement 13 bzw. dem Magnetsegment und das Zahnrad 53 als Teil der Getriebeeinheit an der Drosselklappenwelle 11 montagegerecht angeordnet sind.

Erfindungswesentlich ist weiterhin,
- daß in die Halteeinheit 23 eine Dehnungseinheit 30 angeordnet ist, wie die Fig. 1 bis 3 zeigen.

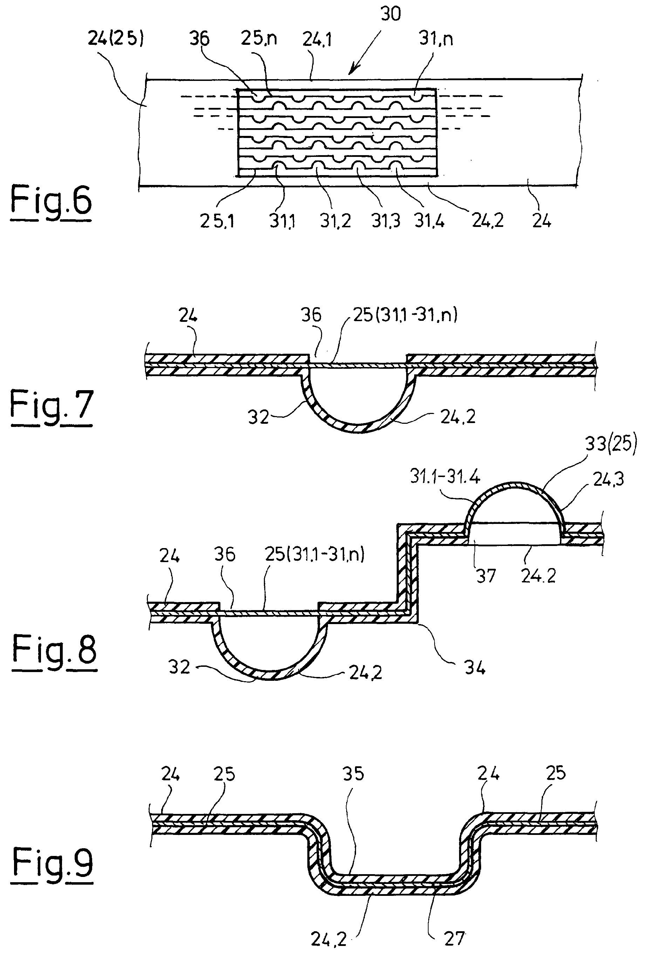

Die Dehnungseinheit 30 ist in Fig. 6 dargestellt.

In das Halteprofil 24 aus Kunststoff, das die Stanzgittereinheit 25 umgibt, ist ein Gitterfenster 36 eingebracht. Hierdurch liegen die Gitterschienen 25.1, ..., 25.n des Stanzgitters frei. Das Gitterfenster wird durch zwei gegenüberliegende Haltestegprofile 24.1, 24.2 begrenzt.

Wie bei der Gitterschiene 25.1 zu sehen ist, werden beabstandet untereinander Dehnungsausnehmungen 31.1, 31.2, 31.3 und 31.4 auf der einen Seite eingebracht. Zu diesen versetzt liegen an der gegenüberliegenden Flachseite der Gitterschiene 25.1 eben solche eingebrachten Dehnungsausnehmungen. Die Dehnungsausnehmungen 31.1, ..., 31.4 sind halbkreisförmig ausgebildet. In die übrigen Gitterschienen ... 25.n sind ebensolche Dehnungsausnehmungen ...31.n eingebracht, die auch eine andere geometrische Konfiguration haben können.

Im Motorraum eines Kraftfahrzeuges kann die Temperatur zwischen minus 40° C bis plus 140°C schwanken. In diesem Fall werden durch die Dehnungsausnehmungen 31.1, ..., 31.n in den Gitterschienen 25.1, ..., 25.n die aus den Temperaturschwankungen resultierenden Längenänderungen aufgenommen. Zieht sich bei Kälte das Metall, aus dem die Gitterschienen bestehen zusammen, können diese aufgrund der Materialschwächungen, die durch die Dehnungsausnehmungen entstehen, gereckt werden. Erwärmt sich hingegen das Metall der Gitterschienen, wird die Längenzunahme ebenfalls durch die Dehnungsausnehmungen kompensiert. Die gerade durchverlaufenden Haltestegprofile 24.1, 24.2 können im begrenzten Umfang ebenfalls solche Längenverkürzungen bzw. Verlängerungen aufgrund der Elastizietät des eingesetzten Kunststoffes kompensieren.

Die Kompensation durch die Kunststoffhaltestegprofile 24.1, 24.2 wird dadurch verbessert, daß diese, wie Fig. 7 zeigt, als ein Dehnungsbogenprofil 32 ausgebildet werden. Hierdurch wird gewährleistet, daß die aus Kunststoff bestehenden Haltestegprofile nicht reißen bzw. brechen können. Es ist aber auch möglich, daß die Haltestegprofile 24.1, 24.2 gerade durchlaufen und die Gitterschienen mit oder ohne eingebrachte Dehnungsausnehmungen als Dehnungsbogenprofil gebogen werden.

In Fig. 8 sind zwei Dehnungskonfigurationen, ähnlich wie in Fig. 6 und 7 gezeigt, hintereinander angeordnet.

Hierbei durchlaufen die mit den Dehnungsausnehmungen versehenen Gitterschienen die als Dehnungsbogenprofil 32 gebogenen Haltestegprofile 24.1, 24.2. Das Dehnungsbogenprofil 32 ist wie auch in Fig. 7 gegenüber dem gerade durchverlaufenden Gitterschienen nach unten durch gebogen.

Hinter dem Dehnungsbogenprofil 32 liegt ein zweites Dehnungsbogenprofil 33, bei dem die Gitterschienen 25.1, ..., 25.n, die ebenfalls mit weiteren Dehnungsausnehmungen versehen sein können, gegenüber den gerade durchlaufenden Haltestegprofilen 24.3 nach oben gewölbt sind. An sich reicht das Hintereinanderschalten der beiden Dehnungsbogenprofile 32, 33 mit entsprechend mit Dehnungsausnehmungen versehenen Gitterschienen aus, um extreme Längenveränderungen aufzunehmen.

Die Kompensationsmöglichkeiten können aber noch dadurch verbessert werden, daß zwischen diesen beiden Dehnungsbogenprofilen ein Dehnungsstufenprofil 34 zwischengeschaltet ist. Das Dehnungsstufenprofil 32 stellt eine zweimalige Abwinklung des Halteprofils 24 dar. Kommt es nun zu Materialschrumpfungen bzw. Materialausdehnungen bei Temperaturänderungen, werden die auftretenden Dehnungs- bzw. Schrumpfungskräfte zuerst von dem Dehnungsstufenprofil 34 und danach erst von den davor- und dahinterliegenden Dehnungsbogenprofilen 32, 33 mit den gerade durchlaufenden Gitterschienen, in denen die Dehnungsausnehmungen eingebracht sind, aufgenommen.

In Fig. 9 ist die Dehnungseinheit 30 als Halteprofildehnungsbogen 35 ausgebildet. Der Haltedehnungsprofilbogen 35 ist ohne das Freilegen der Gitterschienen in die komplette Halteeinheit 23 eingebracht. Hierbei wird beim Biegen das Halteprofil 24 und die von ihm umhüllten Stanzgitterelemente 25 entsprechend gebogen geformt. Der Halteprofildehnungsbogen 25 wird dabei nicht dadurch hergestellt, daß eine bestehende gerade Halteeinheit entsprechend gebogen wird, sondern vielmehr wird das Halteprofil 24 hier entsprechend um die gebogenen Gitterschienen herumgeformt.
Der Halteprofildehnungsbogen 35 ist wie Fig. 9 zeigt, U-förmig ausgebildet. Er kann auch C-förmig, Ω-förmig oder V-förmig ausgebildet sein. Alle diese Konfigurationen nehmen spielend Längendifferenzen bei Temperaturschankungen auf. Durch die Übertragung des von Rohrleitungen bekannten Prinzips des Dehnungsbogens wird eine sichere Dehnungsschleife geschaffen. Besondere Gleitlager, wie sie von Rohrleitungen bekannt sind, sind hier nicht erforderlich, da die Längendifferenzen nicht so erheblich sind.

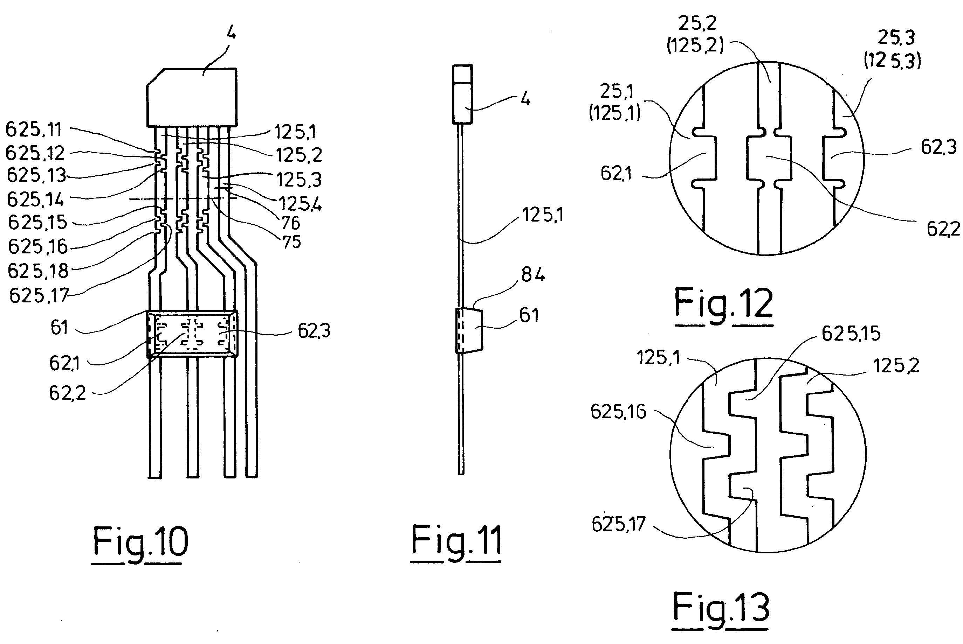

In Fig. 10 und 11 ist eine Hall-Einheit 4 gezeigt. An die Hall-Einheit 4 sind insgesamt vier Anschlußleitungselemente 125.1, 125.2, 125.3 und 125.4 angeformt.

Damit die Hall-Einheit 4 von vornherein nicht durch Dehnungsspannungen hin und hergeschoben wird, sind bereits in die Anschlußleitungselemente Leitungsdehnungsausnehmungen 625.11, ..., 625.18 eingebracht. Die Leitungsdehnungselemente sind damit ähnlich ausgebildet und haben die gleiche Funktion, wie die Dehnungsausnehmungen in den Gitterschienen des Stanzgitterelements 25.

Aus darstellerischen Gründen können die Leitungsdehnungsausnehmungen auch als Dehnungsausnehmungen 31.1, ..., angesehen werden, die in die Gitterschienen eingebracht werden.

Von den vier Anschlußleitungselementen 125.1, ..., 125.4 werden die ersten drei an die Gitterschienen 25.1, 25.2, 25.3 angeschlossen. Dabei führt das Anschlußleitungselement 125.1 das Ausgangssignal, das von der Hall-IC-Einheit abgegeben wird, das zweite Anschlußleitungselement liegt an Plus und das dritte Anschlußleitungelement 125.3 an Minus an. Das vierte Anschlußleitungselement 125.4 ist zu Testzwecken freigehalten.

Zwischen den drei Anschlußleitungselementen 125.1, 125.2 und 125.3 ist ein Bauelemente-Halterahmen 61 vorgesehen. In dem Bauelementehalterahmen 61, der auch entfallen kann, sind Bauelemente-Halteprofile 62.1, 62.2 und 62.3 positioniert. Die drei Halteprofile liegen sich gegenüber. Hierdurch ist es möglich, Bauelemente 84 usw. nebeneinanderliegend anzuordnen.

In Fig. 12 ist ausschnittsweise gezeigt, wie die Anschlußleitungselemente bzw. die Gitterschienen für die Aufnahme der Bauelemente vorbereitet werden. Die Bauelemente-Halteprofile 61.1, 61.2 und 61.3 sind als Verbreiterungen auf den jeweiligen Schienen ausgebildet. Hierdurch kann ein Bauelement zwischen der ersten und der zweiten und das zweite Bauelement zwischen der zweiten und der dritten Schiene positioniert werden.

In Fig. 13 ist ein Ausschnitt der Leitungsdehnungsausnehmungen 625.11, ..., gezeigt. Die Leitungsdehnungsausnehmungen sind dabei so angebracht, daß die Anschlußleitungselemente in diesem Bereich im wesentlichen wellenförmig verlaufen. Hierdurch ist es möglich, auftretende Längenänderungen schnell und sicher aufzunehmen.

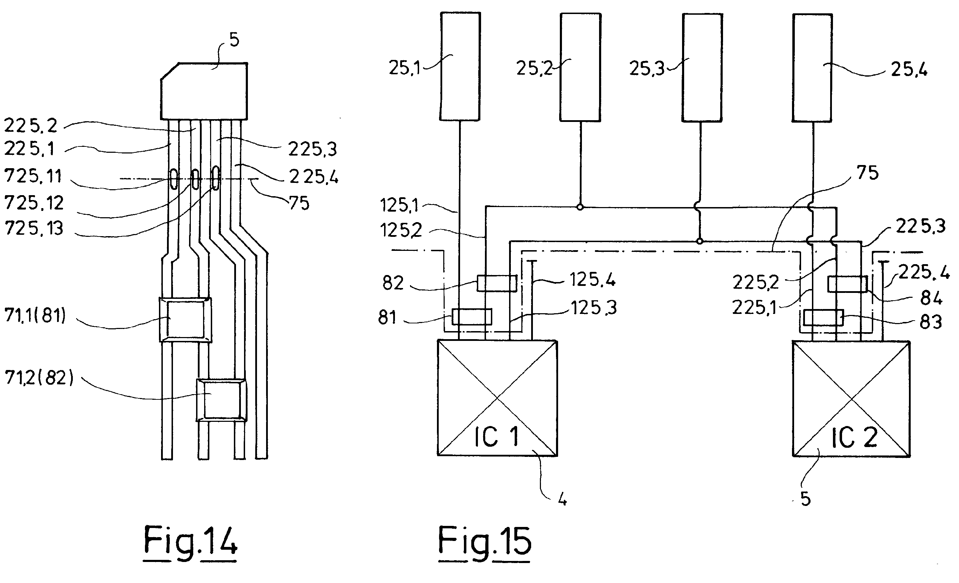

In Fig. 14 ist die Hall-Einheit 5 gezeigt, die ebenfalls vier Anschlußleitungselemente 225.1, 225.2, 225.3 und 225.4 aufweist. Die Anschlußleitungselemente sind ebenso verschaltet. Im Gegensatz zu den Anschlußleitungselementen 125.1, ... sind hier in die Anschlußleitungselemente 225.1, ... langlochförmige Ausnehmungen 725.11, 725.12, 725.13 als Leitungsausnehmungen eingebracht.

Zwischen den Anschlußleitungselementen 225.1 und 225.2 befindet sich ein Bauelemente-Halterahmen 71.1. Darunter und danebenliegend ist zwischen den Anschlußleitungselementen 225.2 und 225.3 ein Bauelemente-Halterahmen 271.2 angeordnet. In beiden Rahmen 71.1 und 71.2 ist jeweils ein Bauelement anzuordnen.

Das Verschalten der beiden Hall-Einheiten 4 und 5 mit ihren Anschlußleitungselementen an die Gitterschienen des Stanzgitterelements ist in Fig. 15 gezeigt. Hierbei liegt das Ausgangssignal des IC 1 der Hall-Einheit 4 an der Gitterschiene 25.1. Das Ausgangssignal des IC 2 der Hall-Einheit 5 wird auf die Gitterschiene 25.4 gelegt. Deshalb sind die Anschlußleitungselemente 125.1 mit der Gitterschiene 25.1 und das Anschlußleitungselemente 225.1 mit der Gitterschiene 25.4 verbunden. Die nächsten beiden Anschlußleitungselemente sind dann auf die Gitterschienen 25.2 und 25.3 geführt. Jeweils das vierte Anschlußleitungselement 125.4 und 225.4 werden, wie bereits erläutert, für Testzwecke freigehalten und genutzt.

Wesentlich ist, daß die Anschlußleitungselemente 125.1, 125.2, 125.3 und die Anschlußleitungselemente 225.1, 225.2, 225.3 an einer Abwinklungslinie 75 abgewinkelt sind (vgl. Fig.10, 14, 15). Das vierte Anschlußleitungselement 125.4, 225.4 ist an einer vor der Abwinklungslinie 75 liegenden Schneidlinie 76 abgeschnitten. Hierdurch ist das IC 1 und das IC 2 gegenüber den gerade verlaufenden Gitterschienen 25.1, ..., 25.4 des Stanzgitterelements 25 um einen bestimmten Winkel abgewinkelt. Der Winkel beträgt in der Regel 90°.

Hierdurch wird gesichert, daß die beiden Hall-Einheiten 4 (IC 1), 5 (IC 2) lagegerecht und lagegenau in die Abstandsausnehmung 9.2 eingeführt und dort gehalten werden.

Wird die Drehstellungsgebervorrichtung, wie sie anhand der Fig. 1 bis 15 erläutert worden ist, montiert, wird auf die in den Gehäusekörper 7 ragende Drosselklappenwelle 11 das Ringmagnetelement 13 bzw. das Magenetsegment und danach die Halteeinheit 23 in den Gehäusekörper 7 eingesetzt. Montagehilfen sichern und erleichtern die Positionierung der Halteeinheit 23 so, daß die beabstandeten Statorsegmente 21, 22 unter Belassung des Luftspaltes 3 gegenüber dem Ringmagnetelement 13 positioniert werden, die Steckereinheit in die Steckerausnehmung 28 und die Antriebseinheit 51 in das Antriebsgehäuse 43 eingesetzt werden. Die auf den IC-Schaltkreis angeordneten bzw. einzelnen mit den Gitterelementen verbundenen Hall-Einheiten 4, 5 werden justiert in der Abstandsausnehmung 9.2 eingesetzt und sind bereits mit der Steckereinheit und der Antriebseinheit verbunden. Der Motoreinheit der Antriebseinheit wird mit lagerecht einjustierten Kohlebürsten und lagegerecht einjustierter Motorwelle installiert.

Abschließend wird das Zahnrad 52 auf den Stift 44 gesteckt, so daß die Antriebseinheit jetzt komplett ist. Auf den Gehäusekörper 7 mit dem eingebauten Drehwinkelsensor wird nun wie in Fig. 1 gezeigt, ein Deckel aufgesetzt, der sich auf dem Stift 44 abstützen kann und den Gehäusekörper 7 verschließt.

Die integrierte Lagerbuchse 56 sichert eine einwandfreie Bewegung der Welle des Motors der Antriebseinheit. Durch das Dichtungselement 29 wird die Steckereinheit 26 abgedichtet in die Steckerausnehmung 28 eingesetzt, so daß das Eindringen von Feuchtigkeit in das Innere des mit dem Deckel verschlossenen Gehäusekörpers 7 vermieden wird.
Wird ein derartig ausgebildeter Drehwinkelsensor mit der Drehstellungsgebervorrichtung Temperaturen zwischen minus 40°C und plus 140°C ausgesetzt, können die Dehnungsausnehmungen 31.1, ... in den Gitterschienen 25.1, ..., und die Leitungsdehnungsausnehmungen 625.11, ... in den Anschlußleitungselementen 125.1, ... die entsprechenden Materialschrumpfungen bzw. Ausdehnungen spielend aufnehmen. Dadurch, daß eine Vielzahl von Ausnehmungen vorgesehen sind, verteilt sich die Vergrößerung bzw. Verkleinerung der Längen entsprechend. Des weiteren verhindern die in den Anschlußleitungselementen eingebrachten Leitungsdehnungsausnehmungen, daß die beiden Hall-Einheiten 4, 5 durch Temperaturschwankungen in der Abstandsausnehmung 9.2 verändert wird bzw. die Stanzgittereinheit nach oben gedrückt wird.

Die entsprechend ausgebildeten Dehnungsbogenprofile 32, 33 sichern, daß das aus Kunststoff bestehende Halteprofil 24 sich nicht verwerfen kann. Vielmehr werden durch die Dehnungsbogenprofile die Längenschrumpfungen bzw. Längenverlängerungen des Halteprofils 24 kompensiert. Damit wird gesichert, daß die Halteeinheit 23, die aus dem Stanzgitterelement 25 und dem sie umgebenden Halteprofil 24 besteht, nicht aus der montierten Stellung herausgedrückt wird.

Das Anbringen von Bauelementen 91.1, ..., 91.n unter Zurhilfenahme der entsprechenden Bauelemente-Halteprofile 61.1, ... ermöglicht ein lagegenaues und präzises Befestigen zwischen den Gitterschienen 25.1., ..., 25.n. Hierdurch können die Bauelemente 91.1, ..., wie Fig. 5 zeigt, nebeneinanderliegend angeordnet werden. Es ist dabei die Möglichkeit gegeben, das Halteprofil 24 über die Bauelemente 91.1, ..., 91.n zu führen. Dadurch sind sie vor äußeren Einflüssen wirksam geschützt.

Das Anbringen zusätzlicher Bauelemente 81, 82, 83, 84 an den Anschlußleitungselementen 125.1, ..., 225.1, ... sichert eine Beeinflussung der Signalflüsse in den einzelnen Anschlußleitungselementen. Die aufgeschweißten Bauelemente 81.1, ... sind fest mit den Anschlußleitungselementen kostengünstig verbunden. Es ist möglich, auch die Bauelemente 81, ..., 84 mit in das Halteprofil 24 zu integrieren. Hierbei kann das Halteprofil entsprechend abgewinkelt und entsprechend zugeformt und ausgeformt weitergeführt werden.

## Patentansprüche

1. Drehstellungsgebervorrichtung, die wenigstens aufweist
- eine Rotoreinheit (1), die in eine Rotationsachse (15) an einem Wellenelement (10, 11) angeordnet ist,
- eine Statoreinheit (2), mit wenigstens einem Sensorelement (4, 5), durch das ein Signal zu erzeugen ist, das einer Drehstellung der Rotoreinheit (1) gegenüber der Statoreinheit (2) entspricht,
- ein Stanzgitterelement (25), das aus wenigstens einer Gitterschiene besteht, mit dem das Signal an eine Ausgangseinheit (26; 51) weiter zu leiten ist und das wenigstens teilweise in einen Isolierstoff eingebettet ist, und
- wenigstens ein Bauelement (81, 82, 83, 84; 91.1, ..., 91.4), **dadurch gekennzeichnet,**
- **daß** das Stanzgitterelement (25) wenigstens teilweise in ein Halteprofil (24) eingebettet ist, mit denen als Halteeinheit (23) ausgebildet die Statoreinheit (2) mit dem Sensorelement (4, 5) und die Ausgangseinheit 26; 51) gehalten sind, und
- **daß** wenigstens in den Gitterschienen (25.1, ..., 25.n) des Stanzgitterelements (25) und wenigstens teilweise in dem Halteprofil (24) eine Dehnungseinheit (30) angeordnet ist.

2. Drehstellungsgebervorrichtung, die wenigstens aufweist
- eine Rotoreinheit (1), die in eine Rotationsachse (15) an einem Wellenelement (10, 11) angeordnet ist,
- eine Statoreinheit (2), mit wenigstens einem Sensorelement (4, 5), durch das ein Signal zu erzeugen ist, das einer Drehstellung der Rotoreinheit (1) gegenüber der Statoreinheit (2) entspricht,
- ein Stanzgitterelement (25), das aus wenigstens einer Gitterschiene besteht, mit dem das Signal an eine Ausgangseinheit (26; 51) weiter zu leiten ist und das wenigstens teilweise in einen Isolierstoff eingebettet ist, und
- wenigstens ein Bauelement (81, 82, 83, 84; 91.1, ..., 91.4), **dadurch gekennzeichnet,**
- **daß** das Stanzgitterelement (25) und wenigstens ein Bauelement (91.1, ..., 91.n) wenigstens teilweise in ein Halteprofil (24) eingebettet ist, mit denen als Halteeinheit (23) ausgebildet die Statoreinheit (2) mit dem Sensorelement (4, 5) und die Ausgangseinheit (26; 51) gehalten sind, und
- **daß** wenigstens in den Gitterschienen (25.1, ..., 25.n) des Stanzgitterelements (25) und wenigstens teilweise in dem Halteprofil (24) eine Dehnungseinheit (30) angeordnet ist.

3. Vorrichtung nach Anspruch 1 **dadurch gekennzeichnet,**
- **daß** wenigstens ein Bauelement (91.1, ..., 91.n) in das Halteprofil (24) eingebettet ist und daß die Statoreinheit (2) mit dem Sensorelement (4,5) und die Ausgangseinheit (26; 51) durch das Halteprofil (24) und das wenigstens teilweise eingeformte Stanzgitterelement (25) als Halteeinheit (23) gehalten sind.

4. Vorrichtung nach Anspruch 1 oder 3 oder 2, **dadurch gekennzeichnet, daß** das Halteprofil (24) aus Isolierstoff und/oder Metall hergestellt ist.

5. Vorrichtung nach Anspruch 1, 3 und 4 oder 2 oder 4, **dadurch gekennzeichnet,**
- **daß** das Sensorelement (4, 5) wenigstens ein Anschlußleitungselement (125.1, ..., 225.1, ...) aufweist, die mit den Gitterschienen (25.1, ..., 25.n) des Stanzgitterelements (25) zu verbinden sind und
- **daß** auf wenigstens einem Anschlußleitungselement (125.1, ..., 225.1, ...,) wenigstens ein weiteres Bauelement (81, ..., 84) angeordnet ist.

6. Vorrichtung nach einem der vorhergehenden Ansprüche, **dadurch gekennzeichnet, daß** in die Anschlußleitungselemente (125.1, ..., 225.1, ...) wenigstens ein Leitungsdehnungsausnehmung (625.11, ..., 625.18) eingebracht ist.

7. Vorrichtung nach einem der vorhergehenden Ansprüche, **dadurch gekennzeichnet, daß** die weiteren Bauelemente (81, ...,84) auf zwei gegenüberliegenden Anschlußleitungselementen (125.1, ..., 225.1,...,) aufgeschweißt sind.

8. Vorrichtung nach einem der vorhergehenden Ansprüche, **dadurch gekennzeichnet,**
- **daß** die Bauelemente (91.1, ..., 91.n) und die weiteren Bauelemente (81, ..., 84) einzeln und/oder auf Leiterplatten parallel oder versetzt zueinander auf den Gitterschienen (25.1, ..., 25.n) und auf den Anschlußleitungselementen (125.1, ...,) angeordnet sind.

9. Vorrichtung nach einem der vorhergehenden Ansprüche, **dadurch gekennzeichnet, daß** eine erste Dehnungseinheit (30) aus einem im Stanzgitter (25) angeordneten Stanzgitterelement-Dehnungsbogen (27) und einem im Halteprofil (24) angeordneten kompatiblen HalteprofilDehnungsbogen (35) besteht.

10. Vorrichtung nach einem der vorhergehenden Ansprüche, **dadurch gekennzeichnet,**
- **daß** eine zweite Dehnungseinheit (30) aus in einem Gitterfenster (36) des Halteprofils (24) freigelegten Gitterschienen (25.1, ..., 25.n) besteht, wobei das Gitterfenster (36) durch wenigstens ein Haltestegprofil (24.1, 24.2) begrenzt ist, und
- **daß** wenigstens in die Gitterschienen (25.1, ..., 25n) wenigstens eine Dehnungsausnehmung (31.1, ..., 31.n) eingebracht ist.

11. Vorrichtung nach einem der vorhergehenden Ansprüche, **dadurch gekennzeichnet, daß** das Haltestegprofil (24.1, 24.2) oder die freigelegten Gitterschienen (25.1, ..., 25.n) als ein Dehnungsbogenprofil (32) ausgebildet ist.

12. Vorrichtung nach einem der vorhergehenden Ansprüche, **dadurch gekennzeichnet, daß** eine dritte Dehnungseinheit (30) aus
in einem ersten Gitterfenster (36) des Halteprofils (24) freigelegten ersten Gitterschienen (25.1, ..., 25.n) besteht, das durch wenigstens ein erstes Halteprofil (24.1, 24.2) begrenzt ist, und
in einem zweiten Gitterfenster (37) des Halteprofils (24) freigelegten zweiten Gitterschienen (25.1, ..., 25.n) besteht, das durch wenigstens ein zweites Halteprofil (24.3) begrenzt ist,
wobei die freigelegten ersten Gitterschienen (25.1, ..., 25.n) oder das erste Halteprofil (24.1, 24.2) als ein erstes Dehnungsbogenprofil (32) und
wobei die freigelegten zweiten Gitterschienen (25.1, ..., 25.n) oder das zweite Halteprofil (24.3) als ein zweites Dehnungsbogenprofil (33) ausgebildet sind.

13. Vorrichtung nach einem der vorhergehenden Ansprüche, **dadurch gekennzeichnet,**
- **daß** in die ersten Gitterschienen (25.1, ..., 25.n) des ersten Gitterfensters (36) wenigstens eine erste Dehnungsausnehmung (31.1, ..., 31.n) eingebracht ist und
- **daß** in die zweiten Gitterschienen (25.1, ..., 25.n) des zweiten Gitterfensters (37) wenigstens eine zweite Dehnungsausnehmungen eingebracht sind.

14. Vorrichtung nach einem der vorhergehenden Ansprüche, **dadurch gekennzeichnet, daß** das (die) Dehnungsbogenprofil (e) (32, 33) gegenüber den geraden durch das (die) Gitterfenster (36, 37) verlaufenden Gitterschienen (25.1, ..., 25.n) nach oben und/oder nach unten gewölbt ist (sind).

15. Vorrichtung nach einem der vorhergehenden Ansprüche, **dadurch gekennzeichnet, daß** das (die) Dehnungsbogenprofil (e) (32, 33) gegenüber den gerade verlaufenden Halteprofilen (24.1, 34.2, 24.3) nach oben und/oder nach unten gewölbt ist (sind).

16. Vorrichtung nach einem der vorhergehenden Ansprüche, **dadurch gekennzeichnet, daß** das (die) Dehnungsbogenprofil (e) (32, 33) gegenüber den geraden durch das (die) Gitterfenster (36, 37) verlaufenden Gitterschienen (25.1, ..., 25.n) nach oben und/oder nach unten gewölbt ist (sind).

17. Vorrichtung nach einem der vorhergehenden Ansprüche, **dadurch gekennzeichnet, daß** zwischen dem ersten und dem zweiten Gitterfenster (36, 37) ein Dehnungsstufenprofil (34) in der Halteeinheit (23) angeordnet ist.

18. Vorrichtung nach einem der vorhergehenden Ansprüche, **dadurch gekennzeichnet,**
- **daß** die Statoreinheit (2) aus wenigstens zwei Statorsegmenten (21,2) besteht, die unter Belassung wenigstens einer Abstandsausnehmung (9.1, 9.2) zueinander angeordnet sind, wobei in eine der Abstandsausnehmungen (9.1, 9.2) wenigstens eine Hall-Einheit (4,5) als Sensorelement angeordnet ist,
- **daß** die Rotoreinheit (1) aus wenigstens einem Magnetelement (13) besteht, das an dem Wellenelement (10, 11) gehalten ist, und
- **daß** rechtwinklig zur Rotationsachse (15) die Halteeinheit (23) in einem Gehäusekörper (7) so einzusetzen ist, daß die Statorsegmente (21, 22) gegenüber dem Magnetsegment (13) unter Belassung eines Luftspalts (3) und die Ausgangseinheit (26, 51) lagegerecht angeordnet sind.

19. Vorrichtung nach einem der vorhergehenden Ansprüche, **dadurch gekennzeichnet,**
- **daß** die Ausgangseinheit aus einer Steckereinheit (26) und aus einer Antriebseinheit (51) besteht und
- **daß** die Steckereinheit (26) in eine Steckerausnehmung (28) und die Antriebseinheit als Motoreinheit (51) mit ihren Kohlebürsten lagegerecht in ein Antriebsgehäuse (43) des Gehäusekörpers (7) eingesetzt sind.

20. Vorrichtung nach einem der vorhergehenden Ansprüche, **dadurch gekennzeichnet, daß** die Anschlußelemente (125.1, ..., 225.1, ...,) entlang einer Abwinklungslinie (75) wenigstens teilweise abgewinkelt sind.

21. Vorrichtung nach einem der vorhergehenden Ansprüche, **dadurch gekennzeichnet, daß** das Magnetelement als wenigstens ein Magnetsegment oder als ein Ringmagnetelement (13) ausgebildet ist.
